(19) Europäisches Patentamt
European Patent Office
Office européen des brevets

(11) Publication number: 0 038 186
B1

(12) **EUROPEAN PATENT SPECIFICATION**

(45) Date of publication of patent specification: **26.10.83**

(51) Int. Cl.³: **C 07 F 9/40**, A 01 N 57/22

(21) Application number: **81301571.6**

(22) Date of filing: **10.04.81**

(54) **Perfluoroamides of diaryl esters of N-phosphonomethylglycinonitrile, herbicidal compositions and herbicidal use thereof.**

(30) Priority: **14.04.80 US 140286**

(43) Date of publication of application: **21.10.81 Bulletin 81/42**

(45) Publication of the grant of the patent: **26.10.83 Bulletin 83/43**

(84) Designated Contracting States: **AT BE CH DE FR GB IT LI**

(56) References cited:
US - A - 3 970 695
US - A - 4 008 296
US - A - 4 067 719

(73) Proprietor: **MONSANTO COMPANY**
**Patent Department 800 North Lindbergh Boulevard**
**St. Louis, Missouri 63166 (US)**

(72) Inventor: **Dutra, Gerard Anthony**
**6 Oak Bend Drive**
**Ladue Missouri 63124 (US)**

(74) Representative: **Nash, Brian Walter et al,**
**Monsanto Europe S.A. Avenue de Tervuren 270-272 Letter Box No 1**
**B-1150 Brussels (BE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 038 186 B1

Perfluoroamides of diaryl esters of n-phosphonomethylglycinonitrile, herbicidal compositions and herbicidal use thereof

This invention relates to N-perfluoroacyl derivatives of N-phosphonomethylglycinonitrile. More particularly, this invention relates to diaryl esters of N-perfluoroacyl-N-phosphonomethylglycinonitriles, the herbicidal use thereof and to herbicidal compositions containing same.

In accordance with U.S. Patent No. 3,970,695, issued July 20, 1976, N-perfluoroacyl-N-phosphonomethylglycines of the formula

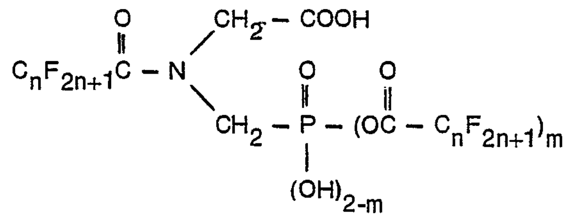

wherein n is an integer of from 1 to 4 and m is 1 or 0 are produced by reacting a perfluoroacyl anhydride with N-phosphonomethylglycine in the presence of a perfluoroalkanoic acid to form the compound of the formula wherein m is 1 and then by hydrolysis to form the compounds wherein m is 0.

U.S. Patent No. 4,008,296 discloses the dialkyl esters of N-phosphonomethylglycinonitrile and discloses that they can be hydrolyzed to yield N-phosphonomethylglycine which is useful as a post-emergent herbicide.

U.S. Patent No. 4,067,719 discloses diaryl esters of N-phosphonomethylglycinonitriles and their strong acid salts which are useful as herbicides.

The N-perfluoroacyl-N-phosphonomethylglycinonitrile compounds of this invention are those having the formula

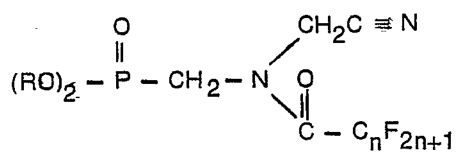

(I)

wherein R is a member of the group consisting of naphthyl, phenyl and phenyl substituted with from 1 to 3 substituents selected from the group consisting of halogen, $C_{1-4}$ alkyl, $C_{1-4}$ alkoxy, nitro and trifluoromethyl and n is an integer of from 1 to 3, and wherein $(RO)_2$ is di(4-methoxycarbonylphenyl) or di(3,4-methylenedioxyphenyl) when n is 1.

As employed herein, the term "halogen" or "halo" includes fluorine, chlorine, bromine and iodine. Preferably, the halo groups are chlorine or fluorine.

Illustrative of the substituted phenyl groups represented by R are, for example, chlorophenyl, bromophenyl, fluorophenyl, methyl phenyl, dimethylphenyl, triethylphenyl, methoxyphenyl, methoxymethylphenyl, nitrophenyl, dinitrophenyl and methylnitrophenyl wherein the substituents are in the ortho, meta or para positions in the phenyl group.

In accordance with the instant invention, the N-perfluoroacylamides of formula (I) are produced by reacting glycinonitrile compounds of the formula

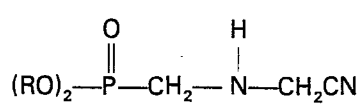

(II)

wherein R is as above-defined, with a perfluoroacyl anhydride of the formula

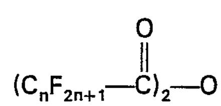

(III)

in the presence of an aprotic solvent that does not react with perfluoroacyl acids and in the presence of an acid acceptor or base and at a temperature of from about −25°C. to about 90°C. or higher and preferably at ambient temperatures.

The ratio of reactants can vary over wide ranges. It is, of course, apparent to those skilled in the art that for best yields, one should employ at least one mole of the perfluoroacyl anhydride of formula (III) for each mole of the glycinonitrile of formula (II) and an equivalent amount of the acid acceptor or

base. It is generally preferred to employ an excess of the acid acceptor or base.

By the terms "$C_{1-4}$ alkyl" and "$C_{1-4}$ alkoxy" are meant those groups having from 1 to 4 carbon atoms including the isomeric forms thereof, for example, methyl, ethyl, propyl, butyl, methoxy, ethoxy, propoxy and butoxy.

The aprotic solvents that can be employed in producing the compounds of the invention include benzene, toluene, methylene chloride, chloroform, dimethyl ether of ethyleneglycol, tetrahydrofuran and diethyl ether. Inasmuch as the perfluoroacyl anhydride can be hydrolyzed to the free acid, it is preferred to employ essentially anhydrous solvents in the reaction.

In producing the compounds of this invention, one employs acid acceptors such as tertiary amines, for example, tertiary alkylamines and tertiary aromatic amines such as trimethylamine, triethylamine, tributylamine, trihexylamine, pyridine and quinoline.

The compounds of this invention are useful as herbicides.

The following examples serve to further illustrate this invention. All parts are parts by weight unless otherwise specifically set forth.

## Example 1

O,O-Diphenylphosphonomethylglycinitrile (3.0 g, 0.01 mole), triethylamine (1.0 g, 0.01 mole) and benzene (50 ml.) were charged into a Pyrex glass reactor. To this solution was added trifluoroacetic anhydride (2.1 g, 0.01 mole) which gave an exothermic reaction. The reactor was cooled to room temperature and stirred overnight. Diethyl ether was then added and the reaction mixture allowed to stand for three days. Carbon tetrachloride (100 ml.) was added and the reaction mixture placed in a separatory funnel and allowed to stand for three additional days. The layers were separated and the carbon tetrachloride layer concentrated to yield a colorless oil (2.4 g). Nuclear magnetic resonance spectral analysis showed this oil to be a mixture of the amide and triethylamine salt of trifluoroacetic acid. To the carbon tetrachloride insolubles was added diethyl ether and the solution washed with 50 ml. water and the ether layer separated and concentrated to yield a yellow oil (1.9 g), $N_D^{21} = 1.5164$, which was identified as [N-(cyanomethyl)-N-(trifluoroacetyl)amino]methylphosphonic acid, diphenyl ester, having the following analysis:

| | | | |
|---|---|---|---|
| Calculated: | C, 51.27; | H, 3.54; | N, 7.03. |
| Found: | C, 51.42; | H, 3.58; | N, 6.93. |

## Example 2

Bis(paramethoxyphenyl)phosphonomethylglycinonitrile (7.22 g, 0.02 mole) and triethylamine (2.02 g, 0.02 mole) were charged into a flask containing 50 ml. of benzene. To the benzene solution was added trifluoroacetic anhydride (4.2 g, 0.02 mole) giving a strongly exothermic reaction causing the benzene to reflux. The reaction mixture was allowed to cool over the weekend. The benzene solution was then extracted with 50 ml. of water. The benzene layer was dried over magnesium sulfate and concentrated to yield [N-(cyanomethyl)-N-(trifluoroacetyl)aminomethyl]phosphonic acid, bis(4-methoxyphenyl) ester as a light brown oil, $N_D^{21} = 1.5248$, and having the following analysis:

| | | | |
|---|---|---|---|
| Calculated: | C, 49.79; | H, 3.96; | N, 6.11. |
| Found: | C, 50.00; | H, 3.98; | N, 6.08. |

## Example 3

Bis(4-chloro-3-methylphenyl)phosphonomethylglycinonitrile (2.0 g; 0.005 mole) and triethylamine (0.5 g, 0.005 mole) were charged into a flask containing 100 ml. of benzene. To the benzene solution with stirring was added trifluoroacetic anhydride (1.1 g; 0.005 mole) and the reaction mixture was allowed to stir overnight. The reaction mixture was then washed with 50 ml. of cold water and the benzene layer dried over magnesium sulfate and concentrated to yield a colorless oil which nuclear magnetic resonance spectral analysis indicated to contain 70% of the desired product and 30% starting material. To this mixture was added 1.1 g of trifluoroacetic anhydride and 0.5 g of triethylamine and the mixture allowed to stir for two hours. The reaction mixture was dissolved in benzene, washed with water and the benzene layer dried over magnesium sulfate and concentrated to yield [N-(cyanomethyl)-N-(trifluoroacetyl)aminomethyl]phosphonic acid, bis(4-chloro-3-methylphenyl) ester . hemihydrate as a light yellow oil, $N_D^{26} = 1.5213$, having the following analysis:

| | | | |
|---|---|---|---|
| Calculated: | C, 45.23; | H, 3.37; | N, 5.35. |
| Found: | C, 45.40; | H, 3.34; | N, 5.55. |

## Example 4

Bis(2,4,6-trimethylphenyl)phosphonomethylglycinonitrile (11.6 g, 0.03 mole) was dissolved in 50 ml. of methylene chloride. To this mixture was added trifluoroacetic anhydride (0.03 mole) and triethylamine (0.03 mole) and the mixture was allowed to stand at ambient temperature for 19 hours. The solution was washed with four 150 ml. portions of water and the methylene chloride layer dried

over magnesium sulfate, filtered and concentrated. This reaction mixture was found to contain some of the desired product. A portion of the reaction mixture (5.6 g) was absorbed on a silica gel column and eluted with 70:30 cyclohexane:ethyl acetate mixture, 20 ml. fractions were taken. Fraction 2 was concentrated and allowed to stand over a 3-day period and the resulting oil and crystals swirled in chloroform/petroleum ether 1:10 volume/volume ratio and filtered to yield crystals which were washed with petroleum ether to yield [N-(cyanomethyl)-N-(trifluoroacetyl)aminomethyl]phosphonic acid, bis(2,4,6-trimethylphenyl) ester as white crystals (0.8 g) having a melting point of 126.5—127.5°C. and giving the following analysis:

| | | | |
|---|---|---|---|
| Calculated: | C, 57.26; | H, 5.43; | N, 5.81. |
| Found: | C, 57.07; | H, 5.64; | N, 5.71. |

Example 5

Bis(parafluorophenyl)phosphonomethylglycinonitrile methane sulfonic acid salt was charged into a flask and dissolved in 75 ml. of methylene chloride. To this solution was added 0.4 g of sodium hydroxide dissolved in 100 ml. of cold water to rapidly neutralize the methane sulfonic acid salt. The methylene chloride solution was then washed with two 50 ml. portions of water. The methylene chloride solution was dried and filtered. The resulting methylene chloride solution was charged into a flask and trifluoroacetic anhydride (0.1 mole) added followed by triethylamine (0.01 mole) and the solution allowed to stand at ambient temperature overnight. The reaction solution was then washed with four 140 ml. portions of water and the methylene chloride layer dried over magnesium sulfate, filtered and concentrated to yield [N-(cyanomethyl)-N-(trifluoroacetyl)amino]methylphosphonic acid, bis(4-fluorophenyl) ester as a yellow oil $N_D^{28} = 1.5012$, and having the following analysis:

| | | | |
|---|---|---|---|
| Calculated: | C, 47.02; | H, 2.79; | N, 6.45. |
| Found: | C, 47.54; | H, 2.86; | N, 6.53. |

Example 6

To a solution of bis(phenyl)phosphonomethylglycinonitrile (0.02 mole) dissolved in methylene chloride (75 ml.) was added 0.02 mole of 90% heptafluorobutyricanhydride and the mixture stirred until a solution was obtained. To the solution was then added 0.025 mole triethylamine slowly. The methylene chloride starting to boil if the triethylamine was added too rapidly. After $1\frac{1}{2}$ hours at room temperature, the methylene chloride solution was washed with four 75 ml portions of water. The methylene chloride layer was dried over magnesium sulfate, filtered and concentrated to a yellow oil. The oil was solidified by stirring in petroleum ether, freezing the oil, decanting petroleum ether and scratching the side of the reactor as the oil warmed and then allowing the vessel to stand. This yielded 5.8 g of a solid. This solid was recrystallized by dissolving in a minimum amount of methylene chloride and adding petroleum ether to approximately the cloud point and then passing a slow stream of nitrogen over the top of the solution until the solution clouded and then allowing the mixture to stand. The suspension was filtered to yield 4.6 g of [N-(cyanomethyl)-N-(heptafluorobutryl)amino]methylphosphonic acid, diphenyl ester, as a white solid, m.p. 62—62.5°C. and having the following analysis:

| | | | |
|---|---|---|---|
| Calculated: | C, 45.80; | H, 2.83; | N, 5.62. |
| Found: | C, 45.87; | H, 2.84; | N, 5.59. |

Example 7

A solution of di(3-nitrophenyl)phosphite (0.07 mole) and 1,3,5-tricyanomethyl-hexahydro-1,3,5-triazine (0.07 mole) dissolved in acetonitrile (85 ml.) was refluxed for 30 minutes and then allowed to cool to room temperature. The suspension was then filtered and the filtrate concentrated to an oil. The oil was dissolved in 100 ml. of methylene chloride and trifluoroacetic anhydride (0.07 mole) was added slowly followed by the addition of triethylamine (0.07 mole) over a 25-minute period. The methylene chloride solution was then allowed to stand for 1 hour at ambient temperature before washing with three 150 ml. portions of water. The methylene chloride solution was then dried over magnesium sulfate, filtered and concentrated to an oil. This oil was found to contain nitrophenol. An 8 g sample of this oil was dissolved in 75 ml. of chloroform and the chloroform solution was then washed with 130 ml. of cold 5% sodium hydroxide containing some ice and then with three 150 ml. portions of water. The chloroform layer was dried over magnesium sulfate, filtered and concentrated to an oil. This oil was redissolved in 60 ml. of chloroform and washed with 80 ml. of cold 5% sodium hydroxide containing some ice and three 140 ml. portions of water to remove the final traces of 3-nitrophenol. The chloroform layer was dried over magnesium sulfate, filtered and concentrated to yield 2.1 g of a light yellow oil. The light yellow oil was solidified by taking up in methylene chloride and precipitating with petroleum ether scratching the flask and allowing it to stand for 2 hours. The solid was removed by filtration and found to be [N-(cyanomethyl)-N-(trifluoroacetyl)amino]methylphosphonic acid, bis(3-nitrophenyl) ester, having a melting point of 108.5—110°C. and giving the following analysis:

| | | | |
|---|---|---|---|
| Calculated: | C, 41.79; | H, 2.48; | N, 11.48. |
| Found: | C, 42.08; | H, 2.57; | N, 10.99. |

Example 8

Bis(3-trifluoromethylphenyl)phosphonomethylglycinonitrile (6.3 g, 0.015 mole) was dissolved in 60 ml. of chloroform and trifluoroacetic anhydride (3.3 g, 0.015 mole) added and the solution allowed to stand for one hour. The chloroform solution was then washed with 50 ml. of 10% ammonium hydroxide solution, 75 ml. of 5% hydrochloric acid and then four times with 125 ml. portions of water. The chloroform layer was dried over magnesium sulfate, filtered and concentrated to an oil. Proton nuclear magnetic resonance spectrum showed this oil to be [N-(cyanomethyl)-N-(trifluoroacetyl)-amino]methylphosphonic acid, bis[3-(trifluoromethyl)phenyl]ester, containing a small amount of 3-trifluoromethylphenol. This oil on standing slowly crystallized and gave the following analysis:

| | | | |
|---|---|---|---|
| Calculated: | C, 42.71; | H, 2.26; | N, 5.24. |
| Found: | C, 43.26; | H, 2.38; | N, 5.32. |

Employing the above procedure, it was also possible to prepare the following compounds. However, in each instance, the product was contaminated with the phenol of naphthol hydrolysis product of the ester:

[N-(cyanomethyl)-N-(trifluoroacetyl)amino]methylphosphonic acid, di($\beta$-naphthol)ester;

[N-(cyanomethyl)-N-(trifluoroacetyl)amino]methylphosphonic acid, di($\alpha$-naphthol)ester;

[N-(cyanomethyl)-N-(trifluoroacetyl)amino]methylphosphonic acid, di(4-nitro-3-methylphenyl)ester;

[N-(cyanomethyl)-N-(trifluoroacetyl)amino]methylphosphonic acid, di(4-methoxycarbonylphenyl)ester; and

[N-(cyanomethyl)-N-(trifluoroacetyl)amino]methylphosphonic acid, di(3,4-methylenedioxyphenyl)ester.

Example 9

The post-emergence herbicidal activity of the various compounds of this invention is demonstrated by greenhouse testing in the following manner. A good grade of top soil is placed in aluminum pans having holes in the bottom and compacted to a depth of 0.95 to 1.27 cm. from the top of the pan. A predetermined number of seeds of each of several dicotyledonous and monocotyledonous annual plant species and/or vegetative propagules for the perennial plant species are placed on the soil and pressed into the soil surface. The seeds and/or vegetative propagules are covered with soil and leveled. The pans are then placed on a sand bench in the greenhouse and watered from below as needed. After the plants reach the desired age (two to three weeks), each pan except for the control pans is removed individually to a spraying chamber and sprayed by means of an atomizer operating at a positive air pressure of approximately 1.46 kg/cm$^2$ absolute. The atomizer contains 6 ml. of a solution or suspension of the chemical and an amount of a cyclohexanone emulsifying agent mixture so that the spray solution or suspension contains about 0.4% by weight of the emulsifier. The spray solution or suspension contains a sufficient amount of the candidate chemical in order to give application rates corresponding to those set forth in the tables. The spray solution is prepared by taking an aliquot of a 1.0% by weight stock solution or suspension of the candidate chemical in an organic solvent such as acetone or tetrahydrofuran or in water. The emulsifying agent employed is a mixture comprising 35 weight percent butylamine dodecylbenzene sulfonate and 65 weight percent of a tall oil ethylene oxide condensate having about 11 moles of ethylene oxide per mole of tall oil. The pans are returned to the greenhouse and watered as before and the injury to the plants as compared to the control is observed at approximately two and four weeks as indicated in the tables under WAT and the results recorded. In some instances, the two-week observations are omitted.

The post-emergence herbicidal activity index used in Tables I and II is as follows:

| *Plant Response* | *Index* |
|---|---|
| 0—24% control | 0 |
| 25—49% control | 1 |
| 50—74% control | 2 |
| 75—99% control | 3 |
| 100% control | 4 |

The plant species utilized in these tests are identified by letter in accordance with the following legend:

| | |
|---|---|
| A—Canada Thistle* | K—Barnyardgrass |
| B—Cocklebur | L—Soybean |
| C—Velvetleaf | M—Sugar Beet |
| D—Morningglory | N—Wheat |
| E—Lambsquarters | O—Rice |
| F—Smartweed | P—Sorghum |
| G—Yellow Nutsedge* | Q—Wild Buckwheat |
| H—Quackgrass* | R—Hemp Sesbania |
| I—Johnsongrass* | S—Panicum Spp |
| J—Downy Brome | T—Crabgrass |

* Established from vegetative propagules.

TABLE I

| Compound of Example No. | WAT | kg/ha | Plant Species A | B | C | D | E | F | G | H | I | J | K |
|---|---|---|---|---|---|---|---|---|---|---|---|---|---|
| 1 | 4 | 11.2 | 2 | 4 | 2 | 2 | 4 | 4 | 2 | 1 | 4 | 3 | 4 |
| 1 | 4 | 5.6 | 1 | 3 | 2 | 2 | 2 | 3 | 3 | 0 | 3 | 0 | 2 |
| 2 | 4 | 11.2 | 2 | 2 | 1 | 2 | 3 | 2 | 1 | 2 | 3 | 2 | 2 |
| 2 | 4 | 5.6 | 1 | 3 | 1 | 1 | — | 0 | 1 | 1 | 2 | 0 | 2 |
| 3 | 4 | 22.4 | 2 | 2 | 2 | 1 | 1 | 2 | 1 | 1 | 1 | 1 | 3 |
| 3 | 4 | 11.2 | 1 | 2 | — | 1 | 4 | 0 | 1 | 0 | 1 | 2 | 2 |
| 4 | 4 | 22.4 | 0 | 0 | 0 | 0 | 1 | 0 | 0 | 0 | 0 | 0 | 0 |
| 5 | 4 | 22.4 | 3 | 3 | 4 | 3 | 4 | 4 | 2 | 3 | 4 | 2 | 3 |
| 5 | 4 | 11.2 | 2 | 4 | 3 | 2 | 2 | 3 | 3 | 3 | 3 | 2 | 3 |
| 5 | 4 | 5.6 | 4 | 3 | 3 | 2 | 4 | 4 | 2 | 2 | 3 | 3 | 2 |
| 6 | 4 | 22.4 | 2 | 2 | 2 | 2 | — | 3 | 1 | 1 | 3 | 3 | 3 |
| 6 | 4 | 11.2 | 1 | 1 | 1 | 1 | 4 | 1 | 1 | 0 | 2 | 3 | 2 |
| 7 | 4 | 11.2 | — | 4 | 4 | 2 | 4 | 4 | 3 | 4 | 3 | 4 | 3 |
| 7 | 4 | 5.6 | — | 3 | 3 | 2 | 3 | 4 | 3 | 3 | 3 | 4 | 3 |
| 8 | 4 | 11.2 | — | 3 | 4 | 2 | 3 | 4 | 2 | 4 | 3 | 3 | 3 |
| 8 | 4 | 5.6 | — | 4 | 2 | 2 | 2 | 3 | 2 | 3 | 2 | 3 | 3 |

TABLE II

| Compound of Example No. | WAT | kg/ha | Plant Species L | M | N | O | P | B | Q | D | R | E | F | C | J | S | K | T |
|---|---|---|---|---|---|---|---|---|---|---|---|---|---|---|---|---|---|---|
| 1 | 4 | 5.6 | 2 | 1 | 2 | 3 | 4 | 3 | 3 | 3 | 2 | 4 | 2 | 3 | 4 | 4 | 4 | 3 |
| 1 | 4 | 1.12 | 1 | 0 | 0 | 1 | 3 | 2 | 1 | 2 | 0 | 1 | 1 | 1 | 1 | 2 | 1 | 2 |
| 2 | 4 | 5.6 | 3 | 3 | 2 | 2 | 3 | 3 | 4 | 2 | 4 | 4 | 3 | 4 | 4 | 2 | 2 | 3 |
| 2 | 4 | 1.12 | 1 | 1 | 1 | 1 | 3 | 2 | 2 | 3 | — | 1 | 1 | 1 | 1 | 1 | 1 | 2 |
| 5 | 4 | 5.6 | 2 | 2 | 2 | 3 | 3 | 4 | 3 | 3 | 3 | 3 | 4 | 3 | 3 | 4 | 3 | 4 |
| 5 | 4 | 1.12 | 1 | 1 | 1 | 2 | 3 | 3 | 2 | 2 | 2 | 2 | 1 | 2 | 3 | 3 | 3 | 3 |
| 5 | 4 | .28 | 0 | 0 | 0 | 0 | 1 | 2 | 1 | 1 | 0 | 2 | 0 | 1 | 0 | 0 | 1 | 2 |
| 6 | 4 | 5.6 | 1 | 0 | 2 | 3 | 4 | 3 | 2 | 2 | — | 3 | 3 | 2 | 3 | 2 | 3 | 3 |
| 6 | 4 | 1.12 | 1 | 4 | 1 | 1 | 2 | 3 | 1 | 2 | — | 4 | — | 1 | 1 | 0 | 2 | 3 |
| 7 | 4 | 5.6 | 1 | 1 | 2 | 3 | 4 | 3 | 2 | 2 | 1 | 4 | 4 | 2 | 4 | 4 | 3 | — |
| 7 | 4 | 1.12 | 1 | 1 | 1 | 2 | 2 | 2 | 0 | 2 | 1 | 4 | 4 | 2 | 1 | 3 | 2 | — |
| 8 | 4 | 5.6 | 2 | 2 | 2 | 3 | 4 | 3 | 3 | 2 | 2 | — | 4 | 3 | 2 | 4 | 3 | 3 |
| 8 | 4 | 1.12 | 0 | 1 | 1 | 1 | 3 | 1 | 2 | 2 | 1 | — | 4 | 2 | 3 | 1 | 3 | 3 |

From the test results presented in Tables I and II, it can be seen that the post-emergent herbicidal activity of the compounds of this invention is, for the most part, general in nature. In certain specific instances, however, some selectivity is demonstrated. In this regard it should be recognized that each individual species selected for the above tests is a representative member of a recognized family of plant species.

The herbicidal compositions, including concentrates which require dilution prior to application to the plants, of this invention contain from 5 to 95 parts by weight of at least one compound of this invention and from 5 to 95 parts by weight of an adjuvant in liquid or solid form, for example, from about 0.25 to 25 parts by weight of wetting agent, from about 0.25 to 25 parts by weight of a dispersant and from 4.5 to about 94.5 parts by weight of inert liquid extender, e.g., water, acetone, tetrahydrofuran, all parts being by weight of the total composition. Preferably, the compositions of this invention contain from 5 to 75 parts by weight of at least one compound of this invention, together with the adjuvants. Where required, from about 0.1 to 2.0 parts by weight of the inert liquid extender can be replaced by a corrosion inhibitor such as ethanol mercaptan, sodium thiosulfate, dodecylmono or dimercaptan or anti-foaming agent such as a dimethylpolysiloxane, or both. The compositions are prepared by admixing the active ingredient with an adjuvant including diluents, extenders, carriers and conditioning agents to provide compositions in the form of finely-divided particulate solids, pellets, solutions, dispersions or emulsions. Thus, the active ingredient can be used with an adjuvant such as a finely-divided solid, a liquid of organic origin, water, a wetting agent, a dispersing agent, an emulsifying agent or any suitable combination of these.

The herbicidal compositions of this invention, particularly liquids and soluble powders, preferably contain as a conditioning agent one or more surface-active agents in amounts sufficient to render a given composition readily dispersible in water or in oil. The incorporation of a surface-active agent into the compositions greatly enhances their efficacy. By the term "surface-active agent", it is understood that wetting agents, dispersing agents, suspending agents and emulsifying agents are included therein. Anionic, cationic and nonionic agents can be used with equal facility.

Preferred wetting agents are alkyl benzene and alkyl naphthalene sulfonates, sulfated fatty alcohols, amines or acid amides, long chain acid esters of sodium isothionate, esters of sodium sulfosuccinate, sulfated or sulfonated fatty acid esters petroleum sulfonates, sulfonated vegetable oils, polyoxyethylene derivatives of phenols and alkylphenols (particularly isooctylphenol and nonylphenol and polyoxyethylene derivatives of the mono-higher fatty acid esters of hexitol anhydrides (e.g., sorbitan). Preferred dispersants are methyl cellulose, polyvinyl alcohol, sodium lignin, sulfonates, polymeric alkyl naphthalene sulfonates, sodium naphthalene sulfonate, polymethylene bisnaphthalenesulfonate and sodium N-methyl-N-(long chain acid) taurates.

The following list gives some specific herbicidal compositions of this invention. It is to be realized that the solvents and surfactants are interchangeable in the composition.

| | | |
|---|---|---|
| 1. | [N-(cyanomethyl)-N-(trifluoroacetyl)amino]methylphosphonic acid, diphenyl ester | 95 parts |
| | Ethanol | 5 parts |
| 2. | [N-(cyanomethyl)-N-(trifluoroacetyl)amino]methylphosphonic acid, di(4-methoxyphenyl)ester | 95 parts |
| | Ethoxylated nonyl phenol | 5 parts |
| 3. | [N-(cyanomethyl)-N-(trifluoroacetyl)amino]methylphosphonic acid, di(4-chloro-3-methylphenyl)ester | 90 parts |
| | Isopropanol | 10 parts |
| 4. | [N-(cyanomethyl)-N-(trifluoroacetyl)amino]methylphosphonic acid, di(2,4,6-trimethylphenyl)ester | 90 parts |
| | Ethoxylated octyl phenol | 10 parts |

| | | |
|---|---|---|
| 5. | [N-(cyanomethyl)-N-(trifluoro-acetyl)amino]methylphosphonic acid, di(4-fluorophenyl)ester | 90 parts |
| | Chloroform | 5 parts |
| | Ethoxylated dinonyl phenol | 5 parts |
| 6. | [N-(cyanomethyl)-N-(heptafluoro-butyryl)amino]methylphosphonic acid, diphenyl ester | 75 parts |
| | Butanol | 25 parts |
| 7. | [N-(cyanomethyl)-N-(trifluoro-acetyl)amino]methylphosphonic acid, di(3-nitrophenyl)ester | 75 parts |
| | Ethoxylated oleyl alcohol | 25 parts |
| 8. | [N-(cyanomethyl)-N-(trifluoro-acetyl)amino]methylphosphonic acid, di[3-(trifluoromethyl)-phenyl]ester | 75 parts |
| | Acetonitrile | 15 parts |
| | Ethoxylated cocoamine | 10 parts |
| 9. | [N-(cyanomethyl)-N-(trifluoro-acetyl)amino]methylphosphonic acid, diphenyl ester | 75 parts |
| | 1,2-Dimethoxyethane | 20 parts |
| | Ethoxylated tallow amine | 5 parts |
| 10. | [N-(cyanomethyl)-N-(trifluoro-acetyl)amino]methylphosphonic acid, di(4-methoxyphenyl)ester | 50 parts |
| | Dimethylformamide | 50 parts |
| 11. | [N-(cyanomethyl)-N-(trifluoro-acetyl)amino]methylphosphonic acid, di(4-chloro-3-methyl-phenyl)ester | 50 parts |
| | Isopropyl dodecylbenzene sulfonate | 50 parts |
| 12. | [N-(cyanomethyl)-N-(trifluoro-acetyl)amino]methylphosphonic acid, di(2,4,6-trimethyl-phenyl)ester | 50 parts |
| | Dimethylsulfoxide | 40 parts |
| | Ethoxylated soybeanamine | 10 parts |

| | | |
|---|---|---|
| 13. | [N-(cyanomethyl)-N-(trifluoroacetyl)amino]methylphosphonic acid, di(4-fluorophenyl)ester | 50 parts |
| | γ-butyrolactone | 25 parts |
| | Triethanolamine dodecylbenzene sulfonate | 25 parts |
| 14. | [N-(cyanomethyl)-N-(heptafluorobutyryl)amino]methylphosphonic acid, diphenyl ester | 50 parts |
| | 1,1,1-Trichloroethane | 42 parts |
| | Ethoxylated nonyl phenol | 8 parts |
| 15. | [N-(cyanomethyl)-N-(trifluoroacetyl)amino]methylphosphonic acid, di(3-nitrophenyl)ester | 25 parts |
| | Chloroform | 75 parts |
| 16. | [N-(cyanomethyl)-N-(trifluoroacetyl)amino]methylphosphonic acid, di[3-(trifluoromethyl)-phenyl]ester | 25 parts |
| | Chloroform | 70 parts |
| | Ethoxylated tallow amine | 5 parts |
| 17. | [N-(cyanomethyl)-N-(trifluoroacetyl)amino]methylphosphonic acid, diphenyl ester | 25 parts |
| | 1,1,1-Trichloroethane | 74 parts |
| | Ethoxylated oleyl alcohol | 1 part |
| 18. | [N-(cyanomethyl)-N-(trifluoroacetyl)amino]methylphosphonic acid, di(4-methoxyphenyl)ester | 25 parts |
| | Chloroform | 68 parts |
| | Ethoxylated dinonyl phenol | 7 parts |
| 19. | [N-(cyanomethyl)-N-(trifluoroacetyl)amino]methylphosphonic acid, di(4-chloro-3-methylphenyl)ester | 10 parts |
| | Chloroform | 90 parts |
| 20. | [N-(cyanomethyl)-N-(trifluoroacetyl)amino]methylphosphonic acid, di(2,4,6-trimethylphenyl)-ester | 10 parts |
| | Acetone | 80 parts |
| | Polyoxypropylene—polyoxyethylene block copolymer | 10 parts |

| | | |
|---|---|---|
| 21. | [N-(cyanomethyl)-N-(trifluoro-acetyl)amino]methylphosphonic acid, di(4-fluorophenyl)ester | 10 parts |
| | Ethanol | 88 parts |
| | Polyoxyethylene (20) sorbitan-monolaurate | 2 parts |
| 22. | [N-(cyanomethyl)-N-(heptafluoro-butyryl)amino]methylphosphonic acid, diphenyl ester | 10 parts |
| | Isopropanol | 72 parts |
| | Polyoxyethylene sorbitan-monooleate | 18 parts |
| 23. | [N-(cyanomethyl)-N-(trifluoro-acetyl)amino]methylphosphonic acid, di(3-nitrophenyl)ester | 5 parts |
| | Dimethylformamide | 95 parts |
| 24. | [N-(cyanomethyl)-N-(trifluoro-acetyl)amino]methylphosphonic acid, di[3-(trifluromethyl)-phenyl]ester | 5 parts |
| | Acetonitrile | 90 parts |
| | Ethoxylated tallow amine | 5 parts |
| 25. | [N-(cyanomethyl)-N-(trifluoro-acetyl)amino]methylphosphonic acid, diphenyl ester | 5 parts |
| | Ethanol | 94 parts |
| | Ethoxylated tallow amine | 1 part |
| 26. | [N-(cyanomethyl)-N-(trifluoro-acetyl)amino]methylphosphonic acid, di(4-methoxyphenyl)ester | 5 parts |
| | Isopropanol | 80 parts |
| | Ethoxylated cocoamine | 15 parts |

When operating in accordance with the present invention, effective amounts of the compounds or compositions of this invention are applied to the plants, or to soil containing the plant, or are incorporated into aquatic media in any convenient fashion. The application of liquid and particulate solid compositions to plants or soil can be carried out by conventional methods, e.g., power dusters, boom and hand sprayers and spray dusters. The compositions can also be applied from airplanes as a dust or a spray because of their effectiveness at low dosages. The application of herbicidal compositions to aquatic plants is usually carried out by adding the compositions to the aquatic media in the area where control of the aquatic plants is desired.

The application of an effective amount of the compounds or compositions of this invention to the plant is essential and critical for the practice of the present invention. The exact amount of active ingredient to be employed is dependent upon the response desired in the plant as well as such other factors as the plant species and stage of development thereof, and the amount of rainfall as well as the specific glycine employed. In foliar treatment for the control of vegetative growth, the active ingredients are applied in amounts from about 0.112 to about 56.0 or more kilograms per hectare. In pre-emergent treatments, the rate of application can be from about 0.56 to about 22.4 or more kilograms per hextare.

In applications for the control of aquatic plants, the active ingredients are applied in amounts of from about 0.01 parts per million to about 1000 parts per million, based on the aquatic medium. An effective amount for phytotoxic or herbicidal control is that amount necessary for overall or selective control, i.e., a phytotoxic or herbicidal amount. It is believed that one skilled in the art can readily determine from the teachings of this specification, including examples, the approximate application rate.

Although this invention has been described with respect to specific modifications, the details thereof are not to be construed as limitations, for it will be apparent that various equivalents, changes and modifications may be resorted to without departing from the spirit and scope thereof and it is understood that such equivalent embodiments are intended to be included herein.

**Claims for the Contracting States: BE CH DE FR GB IT LI**

1. A compound having the formula

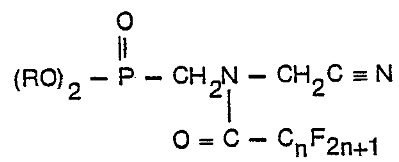

wherein R is a member of the group consisting of naphthyl, phenyl and phenyl substituted with from 1 to 3 substituents individually selected from the class consisting of halogen, $C_{1-4}$ alkyl, $C_{1-4}$ alkoxy, nitro and trifluoromethyl and n is an integer of from 1 to 3, and wherein $(RO)_2$ is di(4-methoxycarbonylphenyl) or di(3,4-methylenedioxyphenyl) when n is 1.

2. A compound of Claim 1 wherein n is 1.

3. A compound of Claim 2 wherein R is phenyl or substituted phenyl.

4. A compound of Claim 3 wherein R is phenyl.

5. A compound of Claim 3 wherein R is 4-methoxyphenyl.

6. A compound of Claim 3 wherein R is 4-fluorophenyl.

7. A compound of Claim 3 wherein R is 3-nitrophenyl.

8. A compound of Claim 3 wherein R is 3-trifluoromethylphenyl.

9. A herbicidal composition comprising an adjuvant and a herbicidally effective amount of a compound of Claim 1.

10. A herbicidal composition of Claim 9 wherein R is 1.

11. A herbicidal composition of Claim 10 wherein R is phenyl or substituted phenyl.

12. A herbicidal composition of Claim 11 wherein R is phenyl.

13. A herbicidal composition of Claim 11 wherein R is 4-methoxyphenyl.

14. A herbicidal composition of Claim 11 wherein R is 4-fluorophenyl.

15. A herbicidal composition of Claim 11 wherein R is 3-nitrophenyl.

16. A herbicidal composition of Claim 11 wherein R is 3-trifluoromethylphenyl.

17. A herbicidal method which comprises contacting a plant with a herbicidally effective amount of a compound of Claim 1.

18. A herbicidal method of Claim 17 wherein n is 1.

19. A herbicidal method of Claim 18 wherein R is phenyl or substituted phenyl.

20. A herbicidal method of Claim 19 wherein R is phenyl.

21. A herbicidal method of Claim 19 wherein R is 4-methoxyphenyl.

22. A herbicidal method of Claim 19 wherein R is 4-fluorophenyl.

23. A herbicidal method of Claim 19 wherein R is 3-nitrophenyl.

24. A herbicidal method of Claim 19 wherein R is 3-trifluoromethylphenyl.

25. A process for the production of an N-perfluoroacylamide of the formula

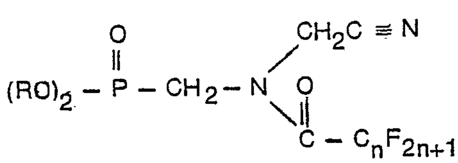

wherein R is a member of the group consisting of naphthyl, phenyl and phenyl substituted with from 1 to 3 substituents selected from the group consisting of halogen, $C_{1-4}$ alkyl, $C_{1-4}$ alkoxy, nitro and trifluoromethyl and n is an integer of from 1 to 3, and wherein $(RO)_2$ is di(4-methoxycarbonylphenyl) or di(3,4-methylenedioxyphenyl) when n is 1, which comprises reacting glycinonitrile compounds of the formula

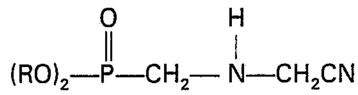

wherein R is as above-defined, with a perfluoroacyl anhydride of the formula

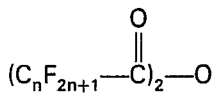

wherein n is as above-defined, in the presence of an aprotic solvent that does not react with perfluoroacyl acids and in the presence of an acid acceptor or base.

**Claims for the Contracting State: AT**

1. A herbicidal composition comprising an adjuvant and a herbicidally effective amount of a compound having the formula

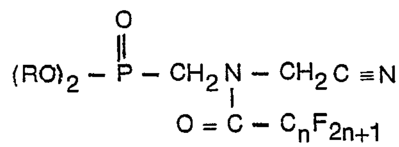

wherein R is a member of the group consisting of naphthyl, phenyl and phenyl substituted with from 1 to 3 substituents individually selected from the class consisting of halogen, $C_{1-4}$ alkyl, $C_{1-4}$ alkoxy, nitro and trifluoromethyl and n is an integer of from 1 to 3, and wherein $(RO)_2$ is di(4-methoxycarbonylphenyl) or di(3,4-methylenedioxyphenyl) when n is 1.

2. A herbicidal composition of Claim 1 wherein n is 1.
3. A herbicidal composition of Claim 2 wherein R is phenyl or substituted phenyl.
4. A herbicidal composition of Claim 3 wherein R is phenyl.
5. A herbicidal composition of Claim 3 wherein R is 4-methoxyphenyl.
6. A herbicidal composition of Claim 3 wherein R is 4-fluorophenyl.
7. A herbicidal composition of Claim 3 wherein R is 3-nitrophenyl.
8. A herbicidal composition of Claim 3 wherein R is 3-trifluoromethylphenyl.
9. A herbicidal method which comprises contacting a plant with a herbicidally effective amount of a compound of claim 1 to 8.
10. A herbicidal method of Claim 9 wherein n is 1.
11. A herbicidal method of Claim 10 wherein R is phenyl or substituted phenyl.
12. A herbicidal method of Claim 11 wherein R is phenyl.
13. A herbicidal method of Claim 11 wherein R is 4-methoxyphenyl.
14. A herbicidal method of Claim 11 wherein R is 4-fluorophenyl.
15. A herbicidal method of Claim 11 wherein R is 3-nitrophenyl.
16. A herbicidal method of Claim 11 wherein R is 3-trifluoromethylphenyl.

**Revendications pour les Etats contractants: BE CH DE FR GB IT LI**

1. Composé ayant la formule:

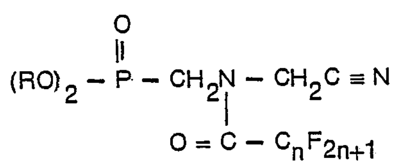

où R est un membre du groupe se composant du groupe naphtyle, phényle et phényle substitué par 1 à 3 substituants individuellement choisis dans la classe se composant d'halogène, de groupe alkyle en $C_{1-4}$, alcoxy en $C_{1-4}$, nitro et trifluorométhyle et n est un nombre entier de 1 à 3, et où $(RO)_2$ est le groupe di(4-méthoxycarbonylphényle) ou di(3,4-méthylènedioxyphényle) quand n vaut 1.

2. Composé selon la revendication 1, où n vaut 1.
3. Composé selon la revendication 2 où R est le groupe phényle ou phényle substitué.
4. Composé selon la revendication 3 où R est le groupe phényle.
5. Composé selon la revendication 3 où R est le groupe 4-méthoxyphényle.
6. Composé selon la revendication 3 où R est le groupe 4-fluorophényle.

7. Composé selon la revendication 3 où R est le groupe 3-nitrophényle.

8. Composé selon la revendication 3 où R est le groupe 3-trifluorométhylphényle.

9. Composition herbicide comprenant un adjuvant et une quantité efficace, du point de vue herbicide, d'un composé de la revendication 1.

10. Composition herbicide de la revendication 9 où n vaut 1.

11. Composition herbicide de la revendication 10 où R est le groupe phényle ou phényle substitué.

12. Composition herbicide de la revendication 11 où R est le groupe phényle.

13. Composition herbicide de la revendication 11, où R est le groupe 4-méthoxyphényle.

14. Composition herbicide de la revendication 11, où R est le groupe 4-fluorophényle.

15. Composition herbicide de la revendication 11, où R est le groupe 3-nitrophényle.

16. Composition herbicide de la revendication 11 où R est le groupe 3-trifluorométhylphényle.

17. Procédé herbicide qui consiste à mettre en contact une plante avec une quantité, efficace du point de vue herbicide, d'un composé de la revendication 1.

18. Procédé herbicide de la revendication 17 où n vaut 1.

19. Procédé herbicide de la revendication 18 où R est le groupe phényle ou phényle substitué.

20. Procédé herbicide de la revendication 19 où R est le groupe phényle.

21. Procédé herbicide de la revendication 19 où R est le groupe 4-méthoxyphényle.

22. Procédé herbicide de la revendication 19 où R est le groupe 4-fluorophényle.

23. Procédé herbicide de la revendication 19 où R est le groupe 3-nitrophényle.

24. Procédé herbicide de la revendication 19 où R est le groupe 3-trifluorométhylphényle.

25. Procédé pour la production d'une N-perfluoroacylamide ayant la formule:

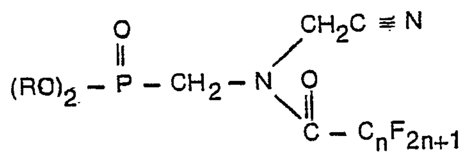

où R est un membre du groupe se composant du groupe naphtyle, phényle et phényle substitué par 1 à 3 substituants choisis dans le groupe se composant d'halogène, de groupe alkyle en $C_{1-4}$, alcoxy en $C_{1-4}$, nitro et trifluorométhyle et n est un nombre entier de 1 à 3, et où $(RO)_2$ est le groupe di(4-méthoxycarbonylphényle) ou di(3,4-méthylènedioxyphényle) quand n vaut 1, qui consiste à faire réagir des composés de glycinonitrile ayant la formule:

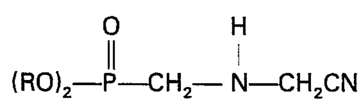

où R est comme défini ci-dessus, avec un anhydride de perfluoroacyle ayant la formule:

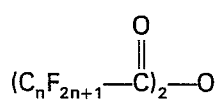

où n est comme défini ci-dessus, en présence d'un solvant neutre qui ne réagit pas avec les acides perfluoroacyliques et en présence d'un accepteur d'acide ou d'une base.

**Revendications pour l'Etat contractant: AT**

1. Composition herbicide comprenant un adjuvant et une quantité, efficace du point de vue herbicide, d'un composé ayant la formule:

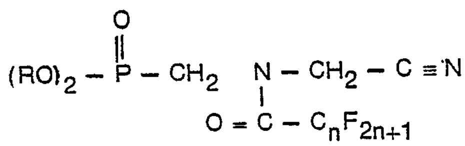

où R est un membre du groupe se composant de groupes naphtyle, phényle et phényle substitué par 1 à 3 substituants individuellement choisis dans la classe se composant d'halogène, de groupe alkyle en $C_{1-4}$, alcoxy en $C_{1-4}$, nitro et trifluorométhyle et n est un nombre entier de 1 à 3, et où $(RO)_2$ est le groupe di(4-méthoxycarbonylphényle) ou di(3,4-méthylènedioxyphényle) quand n vaut 1.

2. Composition herbicide selon la revendication 1, dans laquelle n vaut 1.

3. Composition herbicide selon la revendication 2, dans laquelle R est le groupe phényle ou phényle substitué.

4. Composition herbicide selon la revendication 3, dans laquelle R est le groupe phényle.

5. Composition herbicide selon la revendication 3, dans laquelle R est le groupe 4-méthoxyphényle.

6. Composition herbicide selon la revendication 3, dans laquelle R est le groupe 4-fluorophényle.

7. Composition herbicide selon la revendication 3, dans laquelle R est le groupe 3-nitrophényle.

8. Composition herbicide selon la revendication 3, dans laquelle R est le groupe 3-trifluorométhylphényle.

9. Procédé herbicide, qui consiste à mettre en contact une plante avec une quantité, efficace du point de vue herbicide, d'un composé de la revendication 1 à 8.

10. Procédé herbicide selon la revendication 9, dans lequel n vaut 1.

11. Procédé herbicide selon la revendication 10, dans lequel R est le groupe phényle ou phényle substitué.

12. Procédé herbicide selon la revendication 11, dans lequel R est le groupe phényle.

13. Procédé herbicide selon la revendication 11, dans lequel R est le groupe 4-méthoxyphényle.

14. Procédé herbicide selon la revendication 11, dans lequel R est le groupe 3-nitrophényle.

15. Procédé herbicide selon la revendication 11, dans laquel R est le groupe 3-nitrophényle.

16. Procédé herbicide selon la revendication 11, dans lequel R est le groupe 3-trifluorométhylphényle.

**Patentansprüche für die Vertragsstaaten: BE CH DE FR GB IT LI**

1. Verbindung der allgemeinen Formel

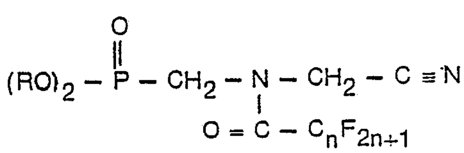

in welcher R einen Rest aus der Gruppe bestehend aus Naphthyl, Phenyl und Phenyl, das mit 1 bis 3 Substituenten substituiert ist, bedeutet, die, jeder für sich, aus der Klasse bestehend aus Halogen, $C_{1-4}$-Alkyl, $C_{1-4}$-Alkoxy, Nitro und Trifluoromethyl ausgewählt sind, der Index n eine ganze Zahl mit einem Wert von 1 bis 3 bedeutet, und worin $(RO)_2$ Di(4-methoxycarbonylphenyl) oder Di(3,4-methylendioxyphenyl) ist, falls der Index n den Wert 1 besitzt.

2. Verbindung nach Anspruch 1, dadurch gekennzeichnet, daß der Index n den Wert 1 besitzt.

3. Verbindung nach Anspruch 2, dadurch gekennzeichnet, daß R Phenyl oder substituiertes Phenyl ist.

4. Verbindung nach Anspruch 3, dadurch gekennzeichnet, daß R Phenyl ist.

5. Verbindung nach Anspruch 3, dadurch gekennzeichnet, daß R 4-Methoxyphenyl ist.

6. Verbindung nach Anspruch 3, dadurch gekennzeichnet, daß R 4-Fluorphenyl ist.

7. Verbindung nach Anspruch 3, dadurch gekennzeichnet, daß R 3-Nitrophenyl ist.

8. Verbindung nach Anspruch 3, dadurch gekennzeichnet, daß R 3-Trifluoromethylphenyl ist.

9. Herbicide Zubereitung, dadurch gekennzeichnet daß sie ein Adjuvans und eine herbicid wirksame Menge einer Verbindung nach Anspruch 1 enthält.

10. Herbicide Zubereitung nach Anspruch 9, dadurch gekennzeichnet, daß der Index n den Wert 1 besitzt.

11. Herbicide Zubereitung nach Anspruch 10, dadurch gekennzeichnet, daß R Phenyl oder substituiertes Phenyl ist.

12. Herbicide Zubereitung nach Anspruch 11, dadurch gekennzeichnet, daß R Phenyl ist.

13. Herbicide Zubereitung nach Anspruch 11, dadurch gekennzeichnet, daß R 4-Methoxyphenyl ist.

14. Herbicide Zubereitung nach Anspruch 11, dadurch gekennzeichnet, daß R 4-Fluorphenyl ist.

15. Herbicide Zubereitung nach Anspruch 11, dadurch gekennzeichnet, daß R 3-Nitrophenyl ist.

16. Herbicide Zubereitung nach Anspruch 11, dadurch gekennzeichnet, daß R 3-Trifluormethylphenyl ist.

17. Herbicides Verfahren, dadurch gekennzeichnet, daß es das In-Kontakt-bringen einer Pflanze mit einer herbicid wirksamen Menge einer Verbindung nach Anspruch 1 umfaßt.

18. Herbicides Verfahren nach Anspruch 17, dadurch gekennzeichnet, daß der Index n den Wert 1 besitzt.

19. Herbicides Verfahren nach Anspruch 18, dadurch gekennzeichnet, daß R Phenyl oder substituiertes Phenyl ist.

20. Herbicides Verfahren nach Anspruch 19, dadurch gekennzeichnet, daß R Phenyl ist.

21. Herbicides Verfahren nach Anspruch 19, dadurch gekennzeichnet, daß R 4-Methoxyphenyl ist.

22. Herbicides Verfahren nach Anspruch 19, dadurch gekennzeichnet, daß R 4-Fluorphenyl ist.

23. Herbicides Verfahren nach Anspruch 19, dadurch gekennzeichnet, daß R 3-Nitrophenyl ist.

24. Herbicides Verfahren nach Anspruch 19, dadurch gekennzeichnet, daß R 3-Trifluoromethylphenyl ist.

25. Verfahren zur Herstellung eines N-Perfluoroacylamids der allgemeinen Formel

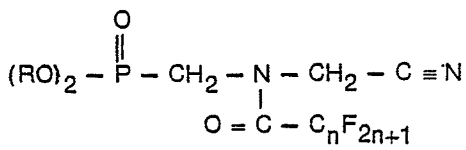

in welcher R einen Rest aus der Gruppe bestehend aus Naphthyl, Phenyl und Phenyl, das mit 1 bis 3 Substituenten ausgewählt aus der Gruppe bestehend aus Halogen, $C_{1-4}$-Alkyl, $C_{1-4}$-Alkoxy, Nitro und Trifluoromethyl, substituiert ist, bedeutet, der Index n eine ganze Zahl mit einem Wert von 1 bis 3 ist, und worin $(RO)_2$ Di(4-methoxycarbonylphenyl) oder Di(3,4-methylendioxyphenyl) bedeutet, falls der Index n den Wert 1 besitzt, dadurch gekennzeichnet, daß man Glycinonitrilverbindungen der nachfolgenden allgemeinen Formel

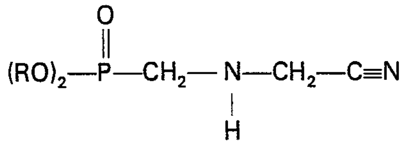

in welcher R die gleiche Bedeutung wie oben besitzt, mit einem Perfluoroacylanhydrid der nachfolgenden allgemeinen Formel

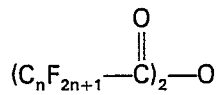

in welcher der Index n die gleiche Bedeutung wie oben besitzt, in Gegenwart eines aprotischen Lösungsmittels, welches mit Perfluoracylsäuren nicht reagiert, und in Gegenwart eines Säureakzeptors oder einer Base, umsetzt.

**Patentansprüche für den Vertragsstaat: AT**

1. Herbicide Zubereitung, dadurch gekennzeichnet, daß sie ein Adjuvans und eine herbicid wirksame Menge einer Verbindung der Formel

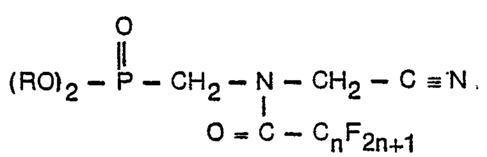

in welcher R einen Rest aus der Gruppe bestehend aus Naphthyl, Phenyl und Phenyl, das mit 1 bis 3 Substituenten substituiert ist, bedeutet, die, jeder für sich, aus der Klasse bestehend aus Halogen, $C_{1-4}$-Alkyl, $C_{1-4}$-Alkoxy, Nitro und Trifluoromethyl ausgewählt sind, der Index n eine ganze Zahl mit einem Wert von 1 bis 3 bedeutet, und worin $(RO)_2$ Di(4-methoxycarbonylphenyl) oder Di(3,4-methylendioxyphenyl) ist, falls der Index n den Wert 1 besitzt, enthält.

2. Herbicide Zubereitung nach Anspruch 1, dadurch gekennzeichnet, daß der Index n den Wert 1 besitzt.

3. Herbicide Zubereitung nach Anspruch 2, dadurch gekennzeichnet, daß R Phenyl oder substituiertes Phenyl ist.

4. Herbicide Zubereitung nach Anspruch 3, dadurch gekennzeichnet, daß R Phenyl ist.

5. Herbicide Zubereitung nach Anspruch 3, dadurch gekennzeichnet, daß R 4-Methoxyphenyl ist.

6. Herbicide Zubereitung nach Anspruch 3, dadurch gekennzeichnet, daß R 4-Fluorphenyl ist.

7. Herbicide Zubereitung nach Anspruch 3, dadurch gekennzeichnet, daß R 3-Nitrophenyl ist.

8. Herbicide Zubereitung nach Anspruch 3, dadurch gekennzeichnet daß R 3-Trifluoromethylphenyl ist.

9. Herbicides Verfahren, dadurch gekennzeichnet, daß es das In-Kontakt-bringen einer Pflanze mit einer herbicid wirksamen Menge einer Verbindung nach Anspruch 1 umfaßt.

10. Herbicides Verfahren nach Anspruch 9, dadurch gekennzeichnet, daß der Index n den Wert 1 besitzt.

11. Herbicides Verfahren nach Anspruch 10, dadurch gekennzeichnet, daß R Phenyl oder substituiertes Phenyl ist.

12. Herbicides Verfahren nach Anspruch 11, dadurch gekennzeichnet, daß R Phenyl ist.

13. Herbicides Verfahren nach Anspruch 11, dadurch gekennzeichnet, daß R 4-Methoxyphenyl ist.

14. Herbicides Verfahren nach Anspruch 11, dadurch gekennzeichnet, daß R 4-Fluorphenyl ist.

15. Herbicides Verfahren nach Anspruch 11, dadurch gekennzeichnet, daß R 3-Nitrophenyl ist.

16. Herbicides Verfahren nach Anspruch 11, dadurch gekennzeichnet, daß R 3-Trifluormethylphenyl ist.